# EUROPEAN PATENT SPECIFICATION

(11) **EP 2 586 664 B1**
(45) Date of publication and mention of the grant of the patent: **29.08.2018**
(21) Application number: 11798155.5
(22) Date of filing: 22.06.2011
(51) Int. Cl.: B60R 21/235, B60R 21/232, D06M 15/227, D06M 15/705, D06M 15/507, D06M 15/333

(54) **Method of Producing a Curtain Airbag**
Verfahren zur Herstellung eines Vorhangairbags
Procédé pour produire un coussin gonflable de type rideau

(30) Priority: 25.06.2010 JP 2010144401
(43) Date of publication of application: 01.05.2013
(73) Proprietor: Sumisho Airbag Systems Co., Ltd., Nagasaki 859-4536 (JP); Pyramid Corporation, Japan, Kurume-shi, Fukuoka 830-0063 (JP); Goo Chemical Co., Ltd., Uji-shi, Kyoto 611-0043 (JP)
(72) Inventor: OBARA Kazuyuki, Matsuura-shi Nagasaki 859-4536 (JP); MAEDA Atsushi, Matsuura-shi Nagasaki 859-4536 (JP); YAMAGUCHI Yukie, Matsuura-shi Nagasaki 859-4536 (JP); TANAKA Toyoshi, Kurume-shi Fukuoka 830-0063 (JP); HIRAUCHI Tohru, Uji-shi Kyoto 611-0043 (JP); TACHIBANA Nobutaka, Uji-shi Kyoto 611-0043 (JP)
(74) Representative: Puschmann Borchert Bardehle Patentanwälte Partnerschaft mbB
(86) International application number: PCT/JP2011/064207
(87) International publication number: WO 2011/162273

(56) References cited:
- EP-A1- 2 256 237
- WO-A1-2009/072353
- WO-A1-2009/072354
- WO-A1-2009/084334
- WO-A1-2009/110318
- WO-A1-2009/119302
- JP-A- 2001 040 583
- JP-A- 2002 144 995
- JP-A- 2006 063 491
- JP-A- 2006 249 655
- JP-A- 2007 100 292
- JP-A- 2009 214 728

## Description

The present invention relates to a method of producing a curtain airbag (also called an inflatable curtain or a curtain bag) which inflates a bag between a side window section of an automobile and an occupant to reduce impact on a head of the occupant, for the purpose of mainly protecting the head of the occupant when a side of the automobile collides with another automobile or an obstacle.

Most passenger cars which are manufactured at present are loaded with so-called airbags for a driver's seat and a front-passenger seat in order to ensure safety of the occupants by rapidly inflating bag bodies between the occupants and automobile interior structures when the fronts of the automobiles collide (head-on collision) with other automobiles or obstacles.

In recent years, in order to protect heads of occupants not only at the time of head-on collision but also at a time of a side of an automobile colliding with another automobile or an obstacle (lateral collision), curtain airbag systems begin to be really loaded, which inflate curtain airbags stored by being folded in ceiling portions and pillar portions above side window sections of the automobiles in order to cover the side window sections at the time of collision.

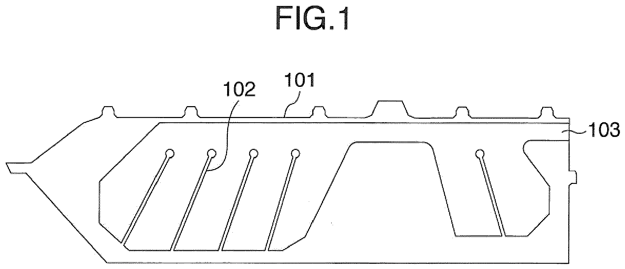

Conventionally, the curtain airbag shown in US-A 6 010 149 is known as one example of a curtain airbag. The curtain airbag of US-A 6 010 149 is configured in such a way that two pieces of fabric coated with a synthetic rubber are joined to each other at a peripheral joining section 101 which is provided at a peripheral edge to define an outer peripheral shape of the bag, and at inner joining sections 102 provided at an inner side of the peripheral joining section 101, as shown in Fig. 1. The inner joining section 102 defines the inflated shape of an inflation section (section to be inflated by introduction of a gas), and is continuing to the peripheral joining section 101, and is provided to be a straight line, a curved line, or a U-shaped configuration with both of the former lines being combined.

Further, the curtain airbag shown in US-A-6 010 149 has a gas inflow port 103 to which a gas generator (inflator) is connected, in an upper portion at a rear side of the bag.

In formation of the above described peripheral joining section and inner joining sections, a method by machine-sewing is put to practical use. A method is also put to practical use which forms a joining section by interlacing weaving yarns with each other in a predetermined position and into a predetermined shape at a weaving stage by using a loom loaded with a Jacquard loom (hereinafter, referred to as an OPW method). Further, there is a type having a gas inflow port at an upper portion of a bag. Further, there are two curtain airbag systems: one simply protects occupants only immediately after a lateral collision occurs (first impact corresponding type) and the other also considers the protection of the occupants in case where an automobile rolls over after a lateral collision occurs (roll over corresponding type).

Furthermore, JP-A-05-16753 suggests an airbag which is light, excellent in flexibility and storability, and especially achieves reduction in impact on a face at the time of instantaneous inflation of the airbag, by using a silicone resin solution as a coating resin and controlling the coating amount.

Meanwhile, JP-A-04-281062 suggests an airbag using a non-coated airbag base fabric to which coating is not applied on the base fabric surface. The non-coated airbag base fabric is used as an airbag base fabric which is light and also excellent in storability. This airbag is dominant at present as the airbags for driver's seats and front-passenger seats.

Furthermore, JP-A-11-222776 and Japanese Patent No. 4151414 each propose an airbag base fabric to which impregnation treatment is applied with a synthetic resin diluent, in order to provide an airbag base fabric which has a low air permeability and is also excellent in flame retardancy while keeping a light weight and favorable storability which the above described non-coated airbag base fabric has. According to Japanese Patent No. 4151414, the air permeability after impregnation treatment is applied with a synthetic resin achieves an air permeability of 0.5 L/cm²/min or lower under a pressure of 50 kPa.

By the way, in case of assuming a lateral collision, a distance between an occupant and an automobile interior structure to which the occupant is hit corresponds to a distance between the occupant and a side window section. The distance is small as compared with a distance between the occupant in a driver's seat and a steering wheel, and a distance between a front-seat occupant and an instrument panel in case of assuming a head-on collision. Accordingly, as one of important required performances of a curtain airbag, it is required that a gas properly flow into necessary portions in a short time period and the bag be inflated to a predetermined internal pressure by the time when the head of an occupant comes in contact with the bag.

Therefore, the coated base fabric which is coated with a synthetic rubber such as chloroprene, chloro-surfonated olefin, and silicone is used for airbags, because the coated base fabric is excellent in properties such as heat resistance, air barrier properties (low air permeability), and flame retardancy, as disclosed in US-A -6 010 149 and JP-A-05-16753. However, the base fabric coated with a synthetic rubber increases the base fabric weight. It has also an unsatisfactory flexibility and causes high manufacturing cost. Therefore, it has a number of insufficient points when it is used as curtain airbag base fabric.

In particular, even though the art of JP-A-05-16753 is sufficient in the properties such as air barrier properties (low air permeability) and flame retardancy as the airbags for a driver's seat and a front-passenger seat, it cannot be always sufficient in ensuring of the low air permeability at an initial pressure at the time of deployment of the curtain airbag, since it has a wide area in the inflated portion and is required to be deployed at a higher speed than the airbags for a driver's seat and a front-passenger seat.

In response to diversification of drivers, such as women and elderly people, it is required to enhance initial restraining performance for occupants at the time of operation of the airbag in order to further enhance safety at the time of collision. However, even in the art disclosed in JP-A-04-281062, it may be sometimes difficult to respond to the requirement to have more excellent low air permeability. Especially in the curtain airbag which has a large area of the inflated portion and is required to deploy at a higher speed than the airbags for a driver's seat and a front-passenger seat, sufficient low air permeability sometimes cannot be achieved.

In order to secure a sufficient low air permeability in the curtain airbag which has a large area of the inflated portion and is required to deploy at a higher speed than the airbags for a driver's seat and a front-passenger seat, the amount of the applied resin has to be increased, even if the arts disclosed in JP-A-11-222776 and Japanese Patent No. 4151414 are used. Thus, it may be sometimes difficult to avoid the problems of increase of the base fabric weight and reduction in flexibility.

JP 2006 063491 A is directed to provide a ground fabric for airbags, which controls sieve opening by uniform yarn slippage even in abruptly expanding and deploying an air bag and limits yarn slippage resisting power to a small range so as to avoid fear of causing local internal pressure concentration leading to a local break. For this purpose, a synthetic fabric woven by a water-jet loom is provided with a diluted synthetic resin liquid, a resin foam or a foamed resin liquid, the fabric is thermally stabilized to give a plurality of fabrics, the peripheral parts of the fabrics are sewed with laying a resin coated surface formed on at least one side of each fabric inside to make a bag-like shape, the seam slippage resisting power of sewing thread in sewing is adjusted to 3-8mm range and a specific value of air permeability is adjusted to 0.001-0.250cc/cm²/sec in the case of air permeation test using an air permeability tester under high differential pressure condition of 124Pa-200kPa.

WO 2009/119302 discloses a polyamide filament which can form an air-bag base cloth having flexibility and impact-absorbing properties to those of air-bag base cloths comprising conventional polyamide 66 filaments and also having a good balance among low air permeability, high strength, heat resistance and durability. Also disclosed are a fiber structure and an air-bag base cloth each comprising the filament. The polyamide 56 filament has a sulfuric acid relative viscosity of 3 to 8, a Mw/Mn ratio of 1.5 to 3, a single fiber fineness of 0.1 to 5 dtex, a strength of 7 to 12 cN/dtex, a shrinkage rate of 5 to 20% as measured after the treatment in boiled water at 98 °C for 30 minutes, a strength of 5 to 11 cN/dtex as measured after the treatment in boiling water, and a stress at 10% elongation of 0.3 to 1.5 cN/dtex as measured after the treatment in boiling water. WO 2009/110318 A1 shows an airbag device in which, without an inflator for the airbag device being provided with a metal guide tube, gas supplied from a gas ejection opening is appropriately guided and an airbag is protected from the gas. An inner tube is connected to a gas introducing opening formed in an airbag, and an inflator around which a cloth-like member is wound is inserted and fixed to a gas path inside the inner tube. The cloth-like member is wound multiple times around the inflator into a tubular shape so that the cloth-like member surrounds gas ejection openings formed in the inflator and so that one end of the cloth-like member is open toward the inside of the airbag, and then the cloth-like member is inserted into the inner tube. When the inflator is activated, gas from the gas ejection openings is guided into the inner tube by the cloth-like member and guided and supplied to gas chambers through the gas path to inflate and expand the airbag.

It is the object of the present invention to provide a method of producing a curtain airbag that can establish both a low air permeability and a flexibility wherein such an curtain airbag can be manufactured at low costs.

For this purpose, the method of producing an airbag of the invention comprises the features of claim 1. Preferred embodiments of the invention are characterized in the sub-claims.

The curtain airbag manufactured according to the present invention has both a low air permeability and a flexibility and prevents an air permeability from being high by the deployment initial pressure. In addition, the curtain airbag of the present invention has high storability because of its high flexibility. Thus, the curtain airbag of the present invention has less possibility of damaging a skin of a human body at the time of operation. Furthermore, the method of applying a resin to the base fabric is simplified, and manufacturing cost can be reduced.

Further advantages, features and potential applications of the present invention may be gathered from the description which follows, in conjunction with the embodiments illustrated in the drawings. Throughout the description, the claims and the drawings, those terms and associated reference signs will be used as are notable from the enclosed list of reference signs. In the drawings
- Fig. 1: is a schematic view of a conventional curtain bag described in U S-A-6 010 149;
- Fig. 2: is an enlarged sectional view showing a section of a crossover portion of warp/weft yarns, and
- Fig. 3: is an enlarged sectional view showing a section of a crossover portion of warp/weft yarns.

A curtain airbag manufactured according to the method of the present invention has an air permeability under a pressure difference of 100 kPa of 5 cc/cm²/sec or lower, preferably 3 cc/cm²/sec or lower, and a bending resistance measured by the cantilever method of 100 mm or less, preferably 80 mm or less. If the air permeability under a pressure difference of 100 kPa is 5 cc/cm²/sec or lower, the curtain airbag which is usually used can achieve the highest internal pressure and the internal pressure maintainability necessary to restrain an occupant and to exert a protection performance. Further, if the bending resistance measured by the cantilever method is 100 mm or less, the storability of the curtain airbag is high because of its flexibility, and has less possibility of damaging a skin of a human body at the time of operation. In the present invention, it is important to establish both the low air permeability and the high flexibility. In order to obtain the low air permeability, the amount of the resin to be applied is generally increased, but in this case, the fabric tends to become hard. Conversely, for the purpose of increasing flexibility, if the amount of the resin to be applied is reduced, or if crumpling or the like is performed after the resin is applied, the air permeability tends to be high. Thus, establishing both of the properties is difficult.

While the fabric used for the curtain airbag of the present invention is not especially limited, the fabric is preferably woven fabric which has high strength and excellent storability. While the raw yarn used for the fabric is not especially limited, it is preferable to use synthetic long fiber of polyamide, polyester or the like, because it has high strength. In case of using a pyro-type inflator using a solid gas forming agent, or a hybrid inflator which uses a high pressure gas and a solid gas forming agent in combination, it is preferable to use nylon 66 fibers and polyester fibers which are excellent in heat resistance, since there is a fear of melting due to the high-temperature gas from the inflator and a combustion residue.

While the fineness of the raw yarn is not especially limited, the total fineness is preferably 100 to 500 dtex, and the single yarn fineness is preferably from 6 dtex or more to 15 dtex or less. If the fineness is 100 dtex or more, the raw yarn can endure a dynamic load by the gas spouting from an inflator, and can also endure a thermal load by a high-temperature gas, a combustion residue and the like in the case of using a pyro-type inflator and a hybrid type inflator. Further, if the fineness is 500 dtex or lower, the raw yarn can be satisfactory from the viewpoint of strength. Further, even when it is woven with high density, many crossover points of warp yarn and weft yarn are made, an aperture thus hardly being generated in the peripheral joining section and the inner joining sections due to the internal pressure at the time of operation. Thus, there is no fear of an outflow of the gas from these sections. Further, the finished woven fabric is thin and light, and storability of the curtain airbag is improved. If the single yarn fineness is 6 dtex or more, replacement of water with a resin is performed smoothly at the time of impregnation with a water synthetic resin after impregnation with water, which will be described later, since the single fineness is high and the gap between the single yarns is large. Also, the low air permeability is easily obtained. Further, if the single yarn fineness is 15 dtex or lower, the hardness of the curtain airbag base fabric is suppressed.

When the bag is manufactured by a machine-sewing method to produce woven fabric, the woven fabric is made to be ordinary plain weave fabric. Thus, raw yarn may be directly used as the warp yarn at the time of weaving. In some cases, the raw yarn may be preferably used after being subjected to oiling, waxing or sizing. In the case of the bag being manufactured by an OPW method, the two pieces fabric are simultaneously woven, and the peripheral joining section and the inner joining sections are formed by interlacing the warp yarn and the weft yarn of the predetermined portions of two pieces of fabric. Thus, the weave density of the peripheral joining section and the inner joining sections becomes doubled as compared with that of the inflation section. Thereby, the force on the warp yarn during weave is large. Thus, the yarn easily becomes fluffy and many weave defects occur, and breakage of the raw yarn occurs in some cases. Therefore, sizing is preferably performed.

The weave density can be properly selected depending on the fineness of the raw yarn to be used. For example, the weave density in total numbers of the warp yarn and the weft yarn is preferably 90 to 110/2.54 cm for the fineness of 470 dtex. Approximately 125/2.54 cm is preferable for the fineness of 350 dtex, and approximately 145/2.54 cm is preferable for the fineness of 235 dtex. Such ranges of the weave density make weaving easy and improve weaving performance and woven fabric quality. Further, the woven fabric can endure the dynamic load and the thermal load by the gas spouting from the aforesaid inflator.

As for the weave density, it is not necessarily required that the numbers of the warp yarns and weft yarns be the same. A difference in density may be given as long as it does not inhibit the physical properties as the bag.

In the curtain airbag of the present invention, the bag needs to be inflated and deployed as quickly as possible. Therefore, in order to prevent an outflow of the gas from the fabric itself, the peripheral joining section and the inner joining sections, a synthetic resin is preferably applied to the fabric.

It is preferable to use the synthetic resin constituted of an element selected from C, H, N and O. In particular, the synthetic resin constituted of an element selected from C, H and O is more preferable from the viewpoint of safety at the time of combustion. Specific examples of the synthetic resins are one or more kinds of resin which are selected from a group consisting of a polyurethane resin and a polyamide resin constituted of C, H, N and O and a copolymer resin thereof, an acrylic resin constituted of C, H and O and a copolymer resin thereof, a polyester resin and a copolymer resin thereof, a polyvinyl resin and a copolymer resin thereof, and a polyvinyl acetate resin and a copolymer resin thereof. It is preferable to use one or more kinds of resin selected from a group consisting of an acrylic resin constituted of C, H and O and a copolymer resin thereof, a polyester resin and a copolymer resin thereof, a polyvinyl resin and a copolymer resin thereof, and polyvinyl acetate resin and a copolymer resin thereof. In particular, if the elongation and adhesiveness to the fabric are taken into consideration, it is preferable to use one or more kinds resin selected from a group consisting of a polyester resin and a copolymer resin thereof, an acrylic resin and a copolymer resin thereof, a polyvinyl acetate resin and a copolymer. resin therefore. Among them, a resin with a polyester resin and a copolymer resin thereof and a polyvinyl acetate resin and a copolymer resin thereof being mixed is more preferable. To show the specific examples of each of the resins, for example, "SUPERFLEX (registered trade name)" made by Dai-ichi Kogyo Seiyaku Co., Ltd., and "HYDRAN (registered trade name)" made by DIC Corporation can be cited as a polyurethane resin; "TORESIN" made by Teikoku Kagaku Sangyo Co. can be cited as a polyamide resin; "ULTRAZOLE (registered trade name)" made by Ganz Chemical CO., Ltd. and "VONCOAT (registered trade name)" made by DIC Corporation can be cited as an acrylic resin; "PLAS SIZE" and "PLAS COAT" made by GOO CHEMICAL CO., LTD. and "Vylonal (registered trade name)" made by TOYOBO CO., LTD. can be cited as a polyester resin; and "Polysol" made by SHOWA KOBUNSHI CO., "Mowinyl" made by Nippon Synthetic Chemical Industry Co., Ltd., and "PLAS SIZE" made by GOO CHEMICAL CO., LTD. can be cited as a vinyl acetate copolymer resin. Note that these resins are only examples of the synthetic resins which can be used in the present invention, and the synthetic resin according to the present invention is not limited to these resins.

The aforesaid synthetic resin is preferably used with a solvent from the viewpoint of excellence of process performance. Also, in particular, the aforesaid synthetic resin is a water synthetic resin using water as a solvent from the viewpoint of reducing an environment burden caused by the removed solvent. The water synthetic resin refers to an aqueous solution or water dispersions (water emulsion) of a synthetic resin. The aqueous solutions or water dispersions preferably do not contain an organic solvent which is often added for the purpose of enhancing solubility and dispersibility of a synthetic resin. In the case of using an organic solvent, when the small amount of the water synthetic resin is used, the shrinkage stress of the fiber constituting the fabric becomes large at the temperature required for removal of the organic solvent. Therefore, an aperture between each of the fibers tends to be large, and the air permeability of the base fabric may sometimes increase.

Further, the water synthetic resin may be mixed with additives such as an antidegradant, a crosslinking agent, an inorganic filler, a coloring agent and a fire retardant within the range without influencing the target performance of the present invention.

While means for applying a synthetic resin to the fabric is not especially specified, known means can be used. For example, means for coating the fabric with a water synthetic resin, means for impregnating the fabric with a water synthetic resin, and means for spraying a water synthetic resin to the fabric are disclosed. Means of impregnation require simple equipment and has an excellent operability, thus can be carried out at low cost.

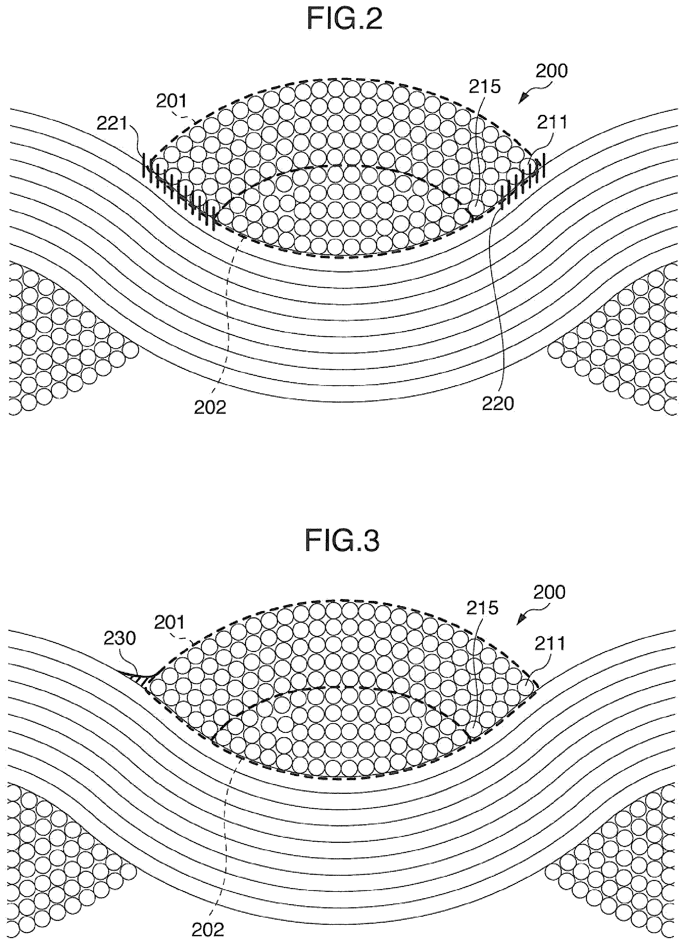

The effect of impregnating the fabric with water in advance will be described with use of Fig. 2. Fig. 2 is an enlarged sectional view of curtain airbag base fabric which is obtained according to the present invention. Fig. 2 shows a warp/weft yarns crossover portion 200 and shows that a warp yarn and a weft yarn cross each other. The warp yarn and the weft yarn are respectively configured by a number of single yarns. The synthetic resin adheres to the single yarns up to a single yarn located underneath some layers from the surface layer of the warp yarn and the weft yarn (portion 201 of Fig. 2). However, since the yarns are impregnated with water, it is prevented that the synthetic resin adheres to the single yarns at deeper layers as shown by a portion 202 of Fig. 2. In this manner, by impregnating the yarns with water in advance, the synthetic resin can be selectively adhered to part of the warp/weft yarns crossover portion 200. Thus, target of both a low air permeability and a low bending resistance can be achieved by a small amount of synthetic resin adherence. As for the adhering way of the synthetic resin, the synthetic resin preferably adheres between the single yarns of the warp yarn or the weft yarn from the surface layer 211 to the fifth layer 215 of the raw yarn, and fills the gap at least one spot between the warp yarns or the weft yarns. While the way of filling the gap is not especially limited, it is preferable that the synthetic resin fills the gap by adhering throughout the length of 10% or more, especially 30% or more of the diameter of the single yarn section. Further, when the base fabric section of a length of 20 mm is observed, in 50% or more, preferably 70% or more, more preferably 80% or more of the end portion of portion 201 in the warp/weft yarns crossover portion 200 which exists in the observed area, it is preferable that the synthetic resin fills the gap between the warp yarn and the weft yarn by adhering to the gap of three or more single yarns of either the warp yarn or the weft yarn which exist in the portion where the warp yarn and the weft yarn come in contact with each other as shown in portion 220 or 221. While the way of filling the gap is not especially limited, it is preferable that the synthetic resin fills the gap by adhering throughout the length of 10% or more, especially preferably 30% or more of the diameter of the single yarn section. Furthermore, as shown by 230 of Fig. 3, it is preferable that the synthetic resin adheres to 50% or more, preferably 70% or more, especially preferably 80% or more of a recessed portion of the single yarns of the warp yarn and the weft yarn of the surface layer 201 of the raw yarn, and the recessed portion is covered with the synthetic resin. While the way of covering the recessed portion is not especially limited, it is preferable that the portion covering the recessed portion has a thickness from the thickness corresponding to the diameter of one warp yarn or weft yarn to the thickness corresponding to the diameters of five warp yarns or weft yarns.

The water impregnation ratio at the time of impregnation with water is preferably 3 to 50 weight%, especially preferably 5 to 30 weight%. If the water impregnation ratio is within this range, the above described effect can be obtained, and the synthetic resin can be applied so that the air permeability can be made sufficiently low. While means for controlling the water impregnation ratio is not especially specified, means can be cited as examples, such as means for squeezing the fabric by a mangle regulated to a suitable pressure after the fabric is impregnated with water, means for sucking water by decompression after the fabric is impregnated with water, means for drying the fabric to a predetermined amount by air drying, a drier or the like after the fabric is impregnated with water, and the like.

While the concentration of the synthetic resin in the water synthetic resin is not especially limited, the concentration of the synthetic resin is preferably 0.05 to 50 weight%, and especially preferably 1 to 45 weight%. The concentration of the synthetic resin within this concentration range is preferable from the viewpoint of controlling the adhesion coefficient of the synthetic resin. Further, the weight increase rate after the water synthetic resin is applied is preferably 1 to 50 weight%, especially preferably 5 to 40 weigh% compared with the dried fabric. The weight increase ratio in this range is preferable from the viewpoint of controlling the adhesion coefficient of the synthetic resin, and the viewpoint of the process performance, since the time required for drying the solvent such as water is decreased. While the temperature of drying solvent that is carried out after the synthetic resin is applied is not especially limited as long as the temperature is within the range without impairing the characteristics of the base fabric, the solvent drying temperature is preferably set at, for example, 50 to 200°C, and is more preferably set at 100 to 180°C.

The adhesion coefficient of the synthetic resin is preferably 0.1 to 15 weight%, especially preferably 1 to 10 weight%, more preferably 2 to 8 weight%. It is preferable that the adhesion coefficient of the synthetic resin is within this range, since a sufficiently low air permeability can be ensured, excellent storability can be kept without impairing the flexibility of the fabric, and the fear of damaging a skin of a human body with the fabric surface at the time of operation of the curtain airbag can be reduced.

The curtain airbag made by the method of the present invention can be manufactured by using the curtain airbag base fabric of the present invention described above, cutting the component parts in accordance with the required shape, and sewing these component parts. While the sewing method and the sewing thread are not especially limited, the conventionally known methods and threads can be adopted. Further, sealing is also preferably performed for the sewn portions by using known sealing means (sealing tape or the like). Further, the curtain airbag made by the method of the present invention also includes the curtain airbags which are manufactured according to an OPW method which uses a loom loaded with a jacquard loom, and forms joining sections by interlacing the weave yarns into predetermined shapes at predetermined positions at the weaving stage.

In order to further improve the performance of the above described curtain airbag, it is preferable that the curtain airbag is configured by joining at least two pieces of fabric to each other at the peripheral joining section provided at the outer peripheral edge and the inner joining portions provided at the inner side of the peripheral joining section, and the aforementioned inner joining sections are designed to be dot-shaped and have a structure provided independently from the aforesaid peripheral joining section and independently from one another. By adopting this design, the arrangement of the small inner joining sections comes to be dispersed, and the gas from the inflator can be uniformly distributed to the inflation sections in a short time period. Thus, the curtain airbag inflates stably and more quickly without damage without causing excessive stress concentration to the specific peripheral joining section and the inner joining sections. Thus, the impact on the occupants can be effectively absorbed. Furthermore, it is advantageous that extreme stress onto the base fabric can be suppressed, since the gas is uniformly distributed. It is also advantageous that it is prevented that low air permeability becomes significantly worse at the time of inflation and deployment of the curtain airbag. It is also advantageous that the synthetic resin adhesion coefficient can be reduced.

While the curtain airbag device made by the method of the present invention is not especially limited except for use of the curtain airbag of the present invention, the respective conventionally known component members (an impact sensor, an inflator, an inflator gas introducing hose, and the like) can be used.

In manufacturing the base fabric of the present invention, calendering is preferably performed in any one of the process steps before application of the water synthetic resin. By calendering, the gaps at the warp/weft yearns crossover portions are eliminated, and the low air permeability of the curtain airbag base fabric of the present invention can be more enhanced. In performing calendering, the heating temperature is preferably 180°C or more to 250°C or less. Further, the pressurizing force is preferably 200 N/mm or more to 500 N/mm or less.

### Examples

Next, the present invention will be described more specifically in accordance with the present examples and reference examples. The present examples are representative examples, and the present invention is not limited to the present examples.

### (1) Air permeability measurement test

Test samples were measured with an air permeability tester exclusively for airbag (FX3350) made by TEXTEST AG. The test head was set at 400 cc and the start pressure was set at 170 kPa. From the test result, the air permeability under the pressure difference of 100 kPa was read. When there were a plurality of air permeability data under the pressure difference of 100 kPa, the average value thereof was obtained and considered as the air permeability under the pressure difference of 100 kPa.

### (2) Cantilever method bending resistance measurement test

Test samples were measured in accordance with the standards of Method A of JIS L 1096 8. 19. 1 (45° cantilever method).

### (3) Cold gas system deployment test

An internal pressure measuring sensor was attached to test samples, and a high-speed deployment test was performed with a cold gas system deployment tester made by Microsys Technologies, Inc. Helium was used as the cold gas, and the number of moles of the cold gas was set so that the maximum internal pressure at the time of deployment was 80 kPa. The orifice bar with a diameter of 0.4 inches was used. The maximum pressure at the time of deployment was measured. And also, the internal pressure was measured 200 msec after the internal pressure reaches the maximum pressure. The internal pressure maintenance factor was calculated using the following equation: internal pressure maintenance factor (%) = internal pressure 200 msec after reaching maximum internal pressure ÷ maximum internal pressure × 100.

### (4) Storability evaluation

Test samples were placed on a table by being bent into halves in the longitudinal direction without application of a load, and the heights of the highest portions were measured.

### Example 1

Polyester yarn made by Hailide Corp. with fineness of 466 dtex and the number of single yarns of 96 was used. Warp yarn was subjected to sizing with a sizing agent with a polyester resin as a main component. Woven fabric by OPW was woven with an air-jet loom (made by Dornier Inc.) loaded with a Jacquard loom (made by Staubli KK) so that the finished weave density was 57 warp yarns/2.54 cm, 49 weft yarns/2.54 cm.

The woven fabric after being woven was scoured by a continuous scouring machine. After drying, heat setting (set temperature of 180°C, speed of 20 mm/min) was performed by a pin stenter.

The above described base fabric was subjected to impregnation treatment using water dispersions with a solid content concentration of 28 weight% (solid content ratio of "PLAS SIZE RD-321" and "PLAS SIZE RD-801" of 2:8), which is composed of a vinyl acetate/ethylene copolymer resin ("PLAS SIZE RD-321" made by GOO CHEMICAL CO., LTD.) and a polyester resin ("PLAS SIZE RD-801" made by GOO CHEMICAL CO., LTD.). After that, the base fabric was dried, and the curtain airbag base fabric with the resin adhesion coefficient of 12 weight% was obtained. After that, the predetermined tests were carried out.

The test results are shown in Table 1.

### Example 2

Nylon 66 raw yarn made by Asahi Kasei Fibers Corp. with fineness of 470 dtex and the number of single yarns of 72 was used. Warp yarn was subjected to sizing with a sizing agent with polyacrylic acid as a main component. Woven fabric by OPW was woven with an air-jet loom (made by Dornier Inc.) loaded with a Jacquard loom (made by Staubli KK) so that the finished weave density was 57 warp yarns/2.54 cm, 49 weft yarns/2.54 cm.

The woven fabric after being woven was scoured by a continuous scouring machine. After drying, heat setting (set temperature of 160°C to 180°C, speed of 20 mm/min) was performed by a pin stenter.

The above described base fabric was subjected to impregnation treatment using water dispersions with a solid content concentration of 28 weight% (solid content ratio of "PLAS SIZE RD-321" and "PLAS SIZE RD-801" of 2:8), which is composed of a vinyl acetate/ethylene copolymer resin ("PLAS SIZE RD-321" made by GOO CHEMICAL CO., LTD.) and a polyester resin ("PLAS SIZE RD-801" made by GOO CHEMICAL CO., LTD.). After that, the base fabric was dried, and the curtain airbag base fabric with the resin adhesion coefficient of 11 weight% was obtained. After that, the predetermined tests were carried out.

The test results are shown in Table 1.

### Example 3

The woven fabric similar to that of example 2 was scoured by a continuous scouring machine. After drying, heat setting (set temperature of 160°C to 180°C, speed of 20 mm/min) was performed by a pin stenter. The woven fabric after the scouring and heat setting was impregnated with water, and thereafter, squeezing was performed with a mangle.

The above described base fabric was air-dried to make the adhesion coefficient of water 10 weight%. The fabric was subjected to impregnation treatment using water dispersions with a solid content concentration of 40 weight%, which is composed of a vinyl acetate/ethylene copolymer resin ("PLAS SIZE RD-321" made by GOO CHEMICAL CO., LTD.) After that, the fabric was dried, and the curtain airbag base fabric with the resin adhesion coefficient of 8 weight% was obtained. After that, the predetermined tests were carried out.

The test results are shown in Table 1.

### Example 4

The curtain airbag base fabric was obtained similarly to example 2 except that the number of single yarns was made 144.

The test results are shown in Table 1.

### Example 5

The curtain airbag base fabric with the resin adhesion coefficient of 6 weight% was obtained similarly to example 2 except that the adhesion coefficient of water was made 10 weight% and an ethylene-vinyl acetate copolymer ("PLAS SIZE RD-321" made by GOO CHEMICAL CO., LTD.) was used to make an impregnation treatment solution with a solid content concentration of 30 weight%.

The test results are shown in Table 1.

### Example 6

The curtain airbag base fabric was obtained similarly to example 5 except that the number of single yarns was made 144.

The test results are shown in Table 1.

### Example 7

The curtain airbag base fabric with the resin adhesion coefficient of 12% was obtained similarly to example 2 except that the adhesion coefficient of water was made 5% and an ethylene-vinyl acetate copolymer ("PLAS SIZE RD-321" made by GOO CHEMICAL CO., LTD.) was used to make an impregnation treatment solution with a solid content concentration of 40 weight%.

The test results are shown in Table 1.

### Example 8

The curtain airbag base fabric was obtained similarly to example 7 except that the number of single yarns was made 144.

The test results are shown in Table 1.

### Example 9

The process of Example 9 is not according to the invention. The process through heat setting was performed with the same method as example 2, and impregnation treatment was directly performed using water dispersions with a solid content concentration of 20 weight% which is composed of an ethylene-vinyl acetate copolymer ("PLAS SIZE RD-321" made by GOO CHEMICAL CO., LTD.), without performing water impregnation. After drying, the curtain airbag base fabric was obtained.

The test results are shown in Table 1.

### Example 10

The process of Example 10 is not according to the invention. The curtain airbag base fabric was obtained similarly to example 9 except that the number of single yarns was made 144.

The test results are shown in Table 1.

### Comparative example 1

The process through heat setting was performed with the same method as example 2, and thereafter, without performing treatment with water/water dispersions of a resin, the curtain airbag base fabric was obtained.

The test results are shown in Table 1.

### Comparative example 2

The process through heat setting was performed with the same method as example 2, and thereafter, impregnation treatment was performed using water dispersions with a solid content concentration of 55 weight% which is composed of an ethylene-vinyl acetate copolymer ("PLAS SIZE RD-321" made by GOO CHEMICAL CO., LTD.). After drying, the curtain airbag base fabric was obtained.

The test results are shown in Table 1.

### Comparative example 3

The curtain airbag base fabric was obtained similarly to comparative example 2 except that the number of single yarns was made 144.

The test results are shown in Table 1.

| | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | COMPARATIVE EXAMPLE 1 | COMPARATIVE EXAMPLE 2 | COMPARATIVE EXAMPLE 3 |
|---|---|---|---|---|---|---|---|---|---|---|---|---|---|
| NUMBER OF SINGLE YARNS | 96 | 72 | 72 | 144 | 72 | 144 | 72 | 144 | 72 | 144 | 72 | 72 | 144 |
| RESIN ADHESION COEFFICIENT (%) | 12 | 11 | 8 | 8 | 6 | 6 | 12 | 12 | 6 | 6 | 0 | 20 | 20 |
| AIR PERMEABILITY (cc/cm²/sec) | 3 | 4 | 2 | 3 | 3 | 4 | 1 | 2 | 4 | 5 | 250 | 2 | 3 |
| BENDING RESISTANCE (mm) | 70 | 73 | 74 | 76 | 70 | 73 | 89 | 92 | 74 | 77 | 65 | 120 | 124 |
| INTERNAL PRESSURE PEAK (kPa) | 73 | 60 | 78 | 74 | 75 | 70 | 81 | 79 | 73 | 68 | 8 | 75 | 71 |
| INTERNAL MAINTENANCE FACTOR (%) | 70 | 55 | 78 | 76 | 70 | 68 | 82 | 80 | 5 | 3 | 0 | 76 | 72 |
| STORABILITY (mm) | 130 | 125 | 134 | 138 | 120 | 127 | 145 | 149 | 136 | 140 | 95 | 188 | 190 |

### Industrial Applicability

As shown in Table 1, the curtain airbag base fabric according to the present invention establishes both a low air permeability and a high flexibility, and thereby can include both high internal pressure maintainability and high storability which are required for a curtain airbag. In particular, the base fabric is impregnated with water before the resin is applied thereto, whereby the resin is selectively adhered to the vicinity of the surface of the base fabric. Thereby, a low air permeability is achieved with a low resin adhesion coefficient. Also, good flexibility and good storability is achieved. Further, from the result of the deployment test, the air permeability could be prevented from being increased by high pressure at the initial time of deployment, and the internal pressure could be maintained. Therefore, the base fabric is suitable for a curtain airbag.

### List of reference signs

- 1: peripheral joining section
- 2: inner joining section
- 3: gas inflow port
- 200: warp/weft yarns crossover portion
- 201: portion where synthetic resin adheres
- 202: portion where synthetic resin does not adhere
- 211: single yarn on surface layer
- 215: single yarn on the fifth layer
- 220, 221: portion where synthetic resin adheres to spot where warp yarn and weft yarn come in contact with each other
- 230: recessed portion where synthetic resin adheres

## Claims

1. Method for producing a curtain airbag comprising a base fabric covered by a synthetic resin using water as a solvent and having an air-permeability 5 cc/cm²/sec or lower under a pressure difference of 100 kPa, and a bending resistance measured by the JIL L 1096 8.19.1, 45° cantilever method of 100 mm or less,
**characterized in that**
each warp/weft yarn is configured by a number of single yarns, that when the base fabric section of a length of 20 mm is observed, the synthetic resin using water as a solvent is adhered in 50% or more, preferably 70% or more, more preferably 80% or more of the end portion of portion (201) in the warp/weft yarns crossover portion (200) which exists in the observed area, that
a resin adhesion coefficient of the synthetic resin to base fabric is 0.1 weight% to 15 weight% preferably 1 to 10 weight%, more preferably 2 to 8 weight%, that
the synthetic resin fills the gap between the warp yarn and the weft yarn by adhering to the gap of three or more single yarns of either the warp yarn or the weft yarn which exist in the portion where the warp yarn and the weft yarn come in contact with each other, that the synthetic resin adheres to the single yarns of a surface layer (211) of the warp yarn or the weft yarn up to a single yarn (215) located underneath some layers from the surface layer (211) of the warp yarn or the weft yarn and not to deeper layers of the warp yarn or the weft yarn, preferably to layers from the surface layer (211) to a fifth layer (215) of single yarns configuring a yarn, that
the concentration of the synthetic resin in the synthetic resin using water as a solvent is 0.05 to 50 weight%, and preferably 1 to 45 weight%, that
adhering the synthetic resin to base fabric is conducted by firstly impregnating the base fabric with water and thereafter impregnating the base fabric with the synthetic resin using water as a solvent, that
the water impregnation ratio at the time of impregnation with water is 3 to 50 weight%, preferably 5 to 30 weight%, and that
a single yarn fineness is 6 dtex or more to 15 dtex or less.

2. Method according to claim 1, **characterized in that** calendaring is performed before impregnating with the synthetic resin using water as a solvent.

3. Method according to claim 1 or 2, **characterized in that** a resin selected form a group consisting of a polyurethane resin, an acrylic resin, a polyester resin a, a polyvinyl resin, and a polyvinyl acetate resin and a copolymer resin thereof is used as the synthetic resin.

## Patentansprüche

1. Verfahren zur Herstellung eines Vorhangairbags, umfassend ein Grundgewebe, das von einem Kunstharz mit Wasser als Lösungsmittel umhüllt ist und eine Luftdurchlässigkeit von 5 cc/cm²/s oder weniger unter einer Druckdifferenz von 100 kPa sowie eine Biegefestigkeit von 100 mm oder weniger aufweist, gemessen nach dem JIL L 1096 8.19.1, 45° Cantilever Verfahren.
**dadurch gekennzeichnet, dass**
jeder Kett-/Schussfaden aus einer Anzahl von Einzelfäden gebildet ist, dass, bei Betrachtung des Grundgewebeabschnitts einer Länge von 20 mm das Kunstharz mit Wasser als Lösungsmittel in 50% oder mehr, vorzugsweise in 70% oder mehr, noch bevorzugter in 80% oder mehr des Endabschnitts von Abschnitt (201) in dem Kett-/Schussfaden-Übergangsabschnitt (200), der in dem betrachteten Bereich vorhanden ist, verklebt ist, dass ein Harz-Haftkoeffizient des Kunstharzes am Grundgewebe 0,1 Gew.-% bis 15 Gew.-%, vorzugsweise 1 bis 10 Gew.-%, noch bevorzugter 2 bis 8 Gew.-%, beträgt,
dass das Kunstharz die Lücke zwischen dem Kettfaden und dem Schussfaden füllt, indem es an der Lücke von drei oder mehr Einzelfäden entweder des Kettfadens oder des Schussfadens haftet, die in dem Bereich vorhanden sind, in dem Kettfaden und Schussfaden miteinander in Kontakt kommen,
dass das Kunstharz an den Einzelfäden einer Oberflächenschicht (211) des Kettfadens oder des Schussfadens bis zu einem Einzelfaden (215) haftet, der sich unterhalb einiger Schichten ab der Oberflächenschicht (211) des Kettfadens oder des Schussfadens befindet, und nicht an tieferen Schichten des Kettfadens oder des Schussfadens, vorzugsweise an Schichten ab der Oberflächenschicht (211) bis zu einer fünften Schicht (215) von Einzelfäden, die einen Faden bilden,
dass die Kunstharzkonzentration in dem Kunstharz mit Wasser als Lösungsmittel 0,05 bis 50 Gew.-%, und vorzugsweise 1 bis 45 Gew.-%, beträgt,
dass das Verkleben des Kunstharzes mit dem Grundgewebe zunächst durch Imprägnieren des Grundgewebes mit Wasser und anschließendes Imprägnieren des Grundgewebes mit dem Kunstharz mit Wasser als Lösungsmittel durchgeführt wird,
dass das Wasserimprägnierungsverhältnis zum Zeitpunkt der Imprägnierung mit Wasser 3 bis 50 Gew.-%, vorzugsweise 5 bis 30 Gew.-%, beträgt, und
dass eine Einzelfadenfeinheit von mindestens 6 dtex und höchstens 15 dtex vorliegt.

2. Verfahren nach Anspruch 1, **dadurch gekennzeichnet, dass** das Kalandrieren vor dem Imprägnieren mit dem Kunstharz mit Wasser als Lösungsmittel erfolgt.

3. Verfahren nach Anspruch 1 oder 2, **dadurch gekennzeichnet, dass** als Kunstharz ein Harz verwendet wird, das ausgewählt ist aus einer Gruppe bestehend aus einem Polyurethanharz, einem Acrylharz, einem Polyesterharz, einem Polyvinylharz und einem Polyvinylacetatharz und einem Copolymerharz davon .

## Revendications

1. Procédé de production d'un coussin gonflable de type rideau comprenant un tissu de base recouvert d'une résine synthétique utilisant l'eau comme solvant et ayant une perméabilité à l'air de 5 cc/cm²/sec ou moins sous une différence de pression de 100 kPa, et une résistance à la flexion mesurée par le procédé en porte-à-faux à 45° JIL L 1096 8.19.1, de 100 mm ou moins,
**caractérisé en ce que**
chaque fil de chaîne/trame est constitué d'un certain nombre de fils individuels, **en ce que** quand l'échantillon de tissu de base d'une longueur de 20 mm est observé, la résine synthétique utilisant l'eau comme solvant adhère dans 50 % ou plus, de préférence 70 % ou plus, plus préférablement 80 % ou plus de la partie d'extrémité de la partie (201) dans la partie où les fils de chaîne/trame (200) se croisent qui existe dans la zone observée, **en ce que**
un coefficient d'adhérence de résine de la résine synthétique au tissu de base est de 0,1 % en poids à 15 % en poids, de préférence de 1 à 10 % en poids, plus préférablement de 2 à 8 % en poids, **en ce que**
la résine synthétique comble l'espace entre le fil de chaîne et le fil de trame en adhérant à l'espace de trois fils individuels ou plus soit du fil de chaîne, soit du fil de trame qui existent dans la partie où le fil de chaîne et le fil de trame sont en contact l'un avec l'autre, **en ce que** la résine synthétique adhère aux fils individuels d'une couche de surface (211) du fil de chaîne ou du fil de trame jusqu'à un fil individuel (215) situé sous un certain nombre de couches à partir de la couche de surface (211) du fil de chaîne ou du fil de trame et pas aux couches les plus profondes du fil de chaîne ou du fil de trame, de préférence aux couches depuis la couche de surface (211) jusqu'à une cinquième couche (215) de fils individuels constituant un fil, **en ce que**
la concentration de résine synthétique dans la résine synthétique utilisant l'eau comme solvant est de 0,05 à 50 % en poids, et de préférence de 1 à 45 % en poids, **en ce que** l'adhésion de la résine synthétique au tissu de base est réalisée en imprégnant d'abord le tissu de base avec de l'eau, puis en imprégnant ensuite le tissu de base avec la résine synthétique utilisant l'eau comme solvant, **en ce que**
le taux d'imprégnation d'eau lors de l'imprégnation avec l'eau est de 3 à 50 % en poids, de préférence de 5 à 30 % en poids, et **en ce que**
une finesse de fil individuel est de 6 dtex ou plus à 15 dtex ou moins.

2. Procédé selon la revendication 1, **caractérisé en ce qu'**un calandrage est effectué avant l'imprégnation avec la résine synthétique utilisant l'eau comme solvant.

3. Procédé selon la revendication 1 ou 2, **caractérisé en ce qu'**une résine choisie dans le groupe constitué par une résine polyuréthanne, une résine acrylique, une résine polyester, une résine polyvinyle, et une résine polyacétate de vinyle et une résine copolymère à base de celles-ci est utilisée à titre de résine synthétique.
